# EUROPEAN PATENT SPECIFICATION

(11) **EP 0 483 736 B1**
(45) Date of publication and mention of the grant of the patent: **03.01.1996**
(21) Application number: 91118371.3
(22) Date of filing: 29.10.1991
(51) Int. Cl.: C08L 23/08

(54) **Resin composition**
Harzmasse
Composition de résines

(30) Priority: 30.10.1990 JP 293095/90
(43) Date of publication of application: 06.05.1992
(73) Proprietor: SHOWA DENKO KABUSHIKI KAISHA, Minato-ku, Tokyo (JP)
(72) Inventor: Watanabe, Kazuyuki, c/o Showa Denko K.K., Oita-shi, Oita-ken (JP); Kira, Yuji, c/o Showa Denko K.K., Oita-shi, Oita-ken (JP)
(74) Representative: Türk, Gille, Hrabal, Leifert

(56) References cited:
- EP-A- 0 138 083
- EP-A- 0 287 140
- EP-A- 0 312 664
- EP-A- 0 316 037
- US-A- 3 967 651

## Description

### BACKGROUND OF THE INVENTION

### 1. Field of the Invention

The present invention relates to a resin composition, which is excellent in adhesive strength, markedly improves compatibility between different polymers, particularly an olefin-vinyl alcohol copolymer resin or a polyamide resin, and other thermoplastic resins, and further is excellent in adhesion to various resins.

### 2. Description of Related Arts

In recent years, as oxygen gas barrier containers, there have been developed films, sheets and containers in the form of multi-layer which are produced by techniques, such as a coextrusion method (feed block, multi manifold method) in which are laminated a polyolefim resin and resins having gas barrier properties, such as a polyamide resin (hereinafter sometimes abbreviated to "PA"), a vinylidene chloride copolymer resin (hereinafter sometimes abbreviated to "PVDC"), and an olefin-vinyl alcohol copolymer resin (hereinafter sometimes abbreviated to "EVOH", typically an ethylene-vinyl acetate copolymer saponified resin), together with an adhesive resin, a dry lamination method using a polyurethanic or polyacrylic dry lamination adhesive, a sandwiched lamination method in which a polyolefin resin and a barrier resin are simultaneously laminated, or a coinjection method.

In recovery of scraps including losses, such as trimming loss, punching loss, fins and off-spec. products of the multi-layer laminates, since the resins thereof are then reutilized in the state of mixtures, there has been encountered a problem as to whether the recovered scraps can be effectively utilized.

For example, in the coextrusion method, there have been problems as follows:

A polyolefin resin, a gas barrier resin and an adhesive resin for laminating these resins are extruded and combined together in a laminar form (feed block method) to produce an original sheet or film in a multi-layer laminate, and this sheet or film is then formed into a desired shape by techniques such as vaccum forming and pressure forming to produce the objective container.

In this method, about 40% by weight of scraps is produced, though depending on the product. For effective utilization of the scraps, a method in which a layer of the obtained from the scraps is newly provided in the laminate, or a method in which the resins obtained from the scraps are mixed with the polyolefin resin for the formation of the outermost layer has been employed.

However, compatibility between the polyolefin resin and the gas barrier resin constituting the scraps is poor and, therefore, various problems take place. For example, when the mixture of the polyolefin resin and the gas barrier resin is extruded or molded into a film, a sheet, a bottle or a tube by extrusion or molding method, separation between the polyolefin resin and the gas barrier resin takes place in the layer in which the resins of the scraps are included; the gas barrier resin peels apart in the form of fine fibrous material; uneven phase separation materials are readily formed; and in long-term operation, the number of the uneven phase separation materials increases and, when observed from the side of the outermost layer, they become fish-eyes or gels thereby seriously deteriorating the appearance of the multi-layer laminate. In some cases, the fish-eyes come out of the outermost layer, thereby causing break, or decreasing its mechanical strength.

In order to overcome the above problems, various methods have been proposed. For example, Japanese Patent Application Laid-Open No. 65544/1975 discloses a method in which, in a multi-layer laminate with layer including EVOH, an ionomer is added to EVOH and uniformly mixed each other to increase gas barrier properties, although this method is not directed to recovery and utilization of scraps. Japanese Patent Publication No. 41657/1976 discloses a method in which thermoplastic resin comprising at least one of ionomer and polyamide having carbonyl group in or grafted to the main chain are blended with low density polyethylene and EVOH. Japanese Patent Publication No. 30104/1976 discloses a method in which a thermoplastic resin having a carbonyl group in the main chain and/or side chain thereof is blended with a polyolefin resin and EVOH, thereby producing a laminar distribution structure. Japanese Patent Application Laid-Open Nos. 199040/1985, 23845/1985, 15243/1987 and 15246/1987 disclose a method in which 0.00001 to 10 phr of ethylenediaminetetraacetic acid, hydrotalsite and aliphatic metal salt having 8 to 22 carbon atoms are compounded to the polyolefin resin and EVOH. Japanese Patent Application Laid-Open Nos. 68743/1987 discloses a method in which metal salts of fatty acids and alkaline earth metal compounds are added to the polypropylene resin and EVOH. In addition, a method of producing a laminar article by blending an alkylcarboxyl-substituted polyolefin resin with a combination of polyolefin resin and at least one of a PA resin, a polyvinyl alcohol resin, EVOH and a polyester resin is disclosed in Japanese Patent Publication No. 14695/1985, U.S. Patent Nos. 3,873,667, 4,410,482, and European Patent No. 0301878A1.

In coextrusion processing, known adhesive resins are generally employed as compatibilizers for resins of scraps.

Known adhesive resins for use as the compatibilizers for EVOH, for example, include resins obtained by graft polymerization or copolymerization of unsaturated carboxylic acid, acid anhydride (typically, maleic anhydride) or an ester monomer to a polyolefin resin by methods described in U.S. Patent Nos. 4,026,967 and 3,953,655, Japanese Patent Application Laid-Open No. 98784/1976, and Japanese Patent Publication Nos. 15423/1969 and 4822/1974.

The above graft polymerization is attained by meltgraft modification using an extruder, or a method in which the polyolefin resin is dissolved in heated xylene and the above monomer is grafted to the polyolefin resin by the use of an organic peroxide.

In the case of PA, a polyolefin resin modified with acid anhydride exemplified with maleic anhydride is used as the adhesive resin or the compatibilizer.

In particular, in the case of PA, there is known a method in which various modified resins, such as a resin obtained by copolymerization of α,β-unsaturated carboxylic acid or its ester with an olefin, a resin obtained by graft modification of a polyolefin resin with α,β-unsaturated carboxylic acid exemplified by maleic anhydride, an ionomer resin obtained by ionization of a copolymer of ethylene/methacrylic acid or its ester with Na, Zn or Mg, for example, and rubber obtained by modification of ethylene/propylene/diene rubber with maleic anhydride, are blended with PA to thereby increase its impact strength.

However, the above resins are not satisfactory as the compatibilizers; they are poor in compatibility with EVOH, PVDC and PA and, therefore, if there is an unreacted graft monomer (e.g., maleic anhydride or ester) in the modified resin used for compatibilization, the unreacted graft monomer reacts with EVOH or PA, thereby producing a large amount of gels, and furthermore causing coloration in yellow.

The ionomer, for example, is poor in adhesive strength and compatibility, and furthermore is expensive, and thus it is limited in use.

Moreover, use of conventional adhesive resins is encountered by problems in that the appearance is poor owing to the presence of fish-eyes and gels; long-term operation cannot be attained in extrusion processing; and when scraps are utilized, the adhesive strength is decreased, and delamination is caused.

EP-A-0 138 084 discloses a polymer composition comprising (A) 81 to 99 parts by weight of a copolymer containing olefin units and unsaturated carboxylic acid compound units having a certain intrinsic viscosity and a certain crystallinity and (B) 19 to 1 part by weight of a thermoplastic elastomer having a certain initial modulus, a certain glass transition temperature and a certain average molecular weight, which is useful as an adhesive. However, this prior art document does neither disclose the problem of the possibility of using of recycled scraps nor is able to solve this problem.

### SUMMARY OF THE INVENTION

An object of the present invention is to provide an adhesive resin composition which improves the compatibility between a gas barrier resin and other thermoplastic resins, and enables to produce laminates which are free from delamination.

Another object of the present invention is to provide a resin composition which is excellent in compatibility and adhesive properties, and thus which permits production of an extruded or molded article having a good appearance without a decrease of the adhesive strength even when scraps are recovered and utilized.

The present invention relates to a resin composition which comprises:
(A) 2 to 98% by weight of an ethylene copolymer resin containing ethylene unit and 0.01 to 20% by weight of an unsaturated carboxylic acid anhydride unit; and
(B) 98 to 2% by weight of a resin mixture comprising
   (i) 50 to 90% by weight of an ethylene-vinyl acetate copolymer resin,
   (ii) 40 to 9.5% by weight of a copolymer resin of ethylene and an α-olefin having 3 to 12 carbon atoms, and
   (iii) 10 to 0.5% by weight of an ethylene/propylene/ unconjugated diene terpolymer, said resin mixture having a toluene extraction residue of 10 to 60% by weight.

The present invention further relates to an adhesive resin or compatibilizer comprising the above resin composition, for lamination of at least one of olefin/vinyl alcohol copolymer resin, polyvinylidene chloride resin and a polyamide resin with other thermoplastic resins.

### DESCRIPTION OF PREFERRED EMBODIMENTS

The component (A) of the present invention is an ethylene copolymer resin containing 0.01 to 20% by weight, preferably 0.2 to 10% by weight of an unsaturated carboxylic acid anhydride unit, and in some cases, other radical polymerizable monomer as a third component (the monomer is hereinafter sometimes referred to as a "third component monomer").

If the amount of the acid anhydride unit is less than 0.01% by weight, the adhesive strength is decreased, and furthermore the compatibility of the thermoplastic resin with EVOH or PA is reduced. On the other hand, if the amount of the acid anhydride unit is more than 20% by weight, the resulting copolymer reacts with EVOH or PA excessively, undesirably resulting in coloration and gelation.

As the unsaturated carboxylic acid anhydride, maleic anhydride, itaconic anhydride, endic anhydride and citraconic anhydride can be used.

The ethylene copolymer resin containing 0.01 to 20% by weight of the aforementioned unsaturated carboxylic acid anhydride may further contain the third component monomer which is radical polymerizable.

As the third component monomer, ester compounds such as vinyl acetate and acrylic acid ester, amide compounds such as acrylamide, methacrylamide and N-alkylacrylamide, acid compounds such as acrylic acid, methacrylic acid and maleic acid, ether compounds such as alkylvinyl ether, hydrocarbon compounds such as styrene, norbornene and butadiene can be used.

The proportion of the third component monomer is at most 40% by weight based on the copolymer. If the third component monomer content is more than 40% by weight, the inherent characteristics of the ethylene copolymer resin are undesirably reduced. The proportion of the third component monomer is more preferably in the range of 2 to 30% by weight in that the compatibility between EVOH or PA and the thermoplastic resin is increased.

The total amount of the unsaturated carboxylic acid anhydride and the third component monomer is preferably not more than 50 parts by weight based on the ethylenic copolymer. More preferably it is 40 parts by weight at most.

Melt flow rate (MFR) (at 190°C under 2.16 kg load) of the ethylene copolymer resin as the component (A) of the resin composition of the present invention, as determined by JIS-K-6760, is preferably 0.1 to 100 g/10 min. and more preferably 0.3 to 80 g/10 min. If MFR is less than 0.1 g/10 min., dispersion becomes difficult in preparation of the resin composition of the present invention, leading to deterioration of the appearance.

On the other hand, if MFR is more than 100 g/10 min., the compatibility of the ethylene copolymer resin with the component (B) of the resin composition of the present invention is decreased. At the same time, in production of the multi-layer laminate, low molecular weight component of ethylene copolymer resin sometimes accumulates in the boundary between layers, decreasing the interlaminar strength of the multi-layer laminate.

As rubber components of adhesive resins, styrene/butadiene rubber, acrylonitrile/butadiene rubber, butyl rubber, chloroprene rubber, silicone rubber, acrylic rubber, urethane rubber, polybutadiene rubber, ethylene/propylene rubber, ethylene/propylene/diene terpolymer, polyisoprene rubber, polybutene-1 rubber, and as a copolymer of ethylene and α-olefin (e.g., butene-1, 4-methylpentene-1, and octene), linear low density polyethylene having lower crystallinity than conventional linear low density polyethylene (sometime called ULDPE or VLDPE) as obtained by applying a technique of production of linear low density polyethylene (LLDPE), are well known.

However, the present inventors' investigation has revealed that although the use of the aforementioned adhesive resins improves the adhesive strength to a certain extent, EVOH or PA readily peels apart from the other thermoplastic resin at the time of recovery and utilization, and the appearance is seriously reduced because of their poor compatibility.

As a result of investigations, it has now been found that if a resin mixture as prepared by mechanically blending, in a molten state, 50 to 90% by weight of an ethylene-vinyl acetate copolymer resin, 40 to 9.5% by weight of a copolymer resin of ethylene and α-olefin having 3 to 12 carbon atoms, and 10 to 0.5% by weight of an ethylene/propylene/ unconjugated diene terpolymer is used in place of the aforementioned conventional adhesive resins, desirable results are obtained.

In preparation of the resin mixture, it is considered that the mechanical mixing causes the resins to react with each other. It has been found that a resin mixture the insoluble content of which is 10 to 60% by weight, as determined by Soxhlet extraction with toluene as a solvent, is suitable for use in the present invention.

If the insoluble content is less than 10% by weight, compatibility between different polymers, particularly EVOH or PA and other thermoplastic resins is undesirably reduced. On the other hand, if the insoluble content is more than 60% by weight, insoluble gels are formed. This should be avoided. More preferably the insoluble content is in the range of 10 to 50% by weight.

MFR (at 190°C under 2.16 kg load) of the resin mixture as the component (B) of the resin composition of. the present invention, as determined by JIS-K-6760, is preferably 0.1 to 100 g/10 min. and more preferably 0.3 to 80 g/10 min. If MFR is less than 0.1 g/10 min., dispersion becomes difficult in preparation of the resin composition of the present invention, leading to deterioration of the appearance.

On the other hand, if MFR is more than 100 g/10 min., the compatibility between the components (A) and (B) is decreased, and at the same time, low molecular weight component of the resin mixture (B) sometimes accumulates in the boundary between layers at the time of production of the multi-layer laminate, decreasing the interlayer strength of the multi-layer laminate.

In connection with the mixing ratio of the components (A) and (B), the proportion of the resin mixture as the component (B) is in the range of 2 to 98% by weight of the resin composition. This range has been determined taking various factors into consideration, such as interlayer strength of the multi-layer laminate, physical properties, processability and compatibility. If the proportion of the resin mixture (B) is more than 98% by weight, adhesive strength, stiffness, heat resistance and processability are reduced. On the other hand, if the proportion of the resin mixture is less than 2% by weight, compatibility and impact resistance are reduced. The proportion of the resin mixture as the component (B) is preferably 5 to 70% by weight and more preferably 10 to 50% by weight.

No effect can be obtained if the components (A) and (B) are used singly. The effects of the present invention can be obtained only when the component (A) is used in the range of 2 to 98% by weight and the component (B) is used in the range of 98 to 2% by weight.

MFR (determined according to JIS-K-6760, under load of 2.16 kg at temperature of 190°C) of the resin composition of the present invention is not critical and chosen depending on a processing method. In the case of extrusion molding, the MFR is suitable to be in the range of 0.1 to 300 g/10 min.

A method of blending for preparation of the resin composition of the present invention is not critical; it is preferred that the resin composition be prepared by the use of a ribbon blender, a high-performance mixer, a kneader, a pelletizer, or a mixing roll, for example, pelletized and then dried. The components (A) and (B) may be supplied directly to a molding machine and molded.

To the resin composition of the present invention, other additives conventionally added to thermoplastic resins can be compounded. Examples of such additives are shown below:

Antioxidant; 2,5-di-tert-butylhydroquinone, 2,6-di-tert-butyl-p-cresol, 4,4-thiobis-(6-tert-butylphenol), 2,2-methylene-bis(4-methyl-6-tert-butylphenol), octadecyl-3-(3',5'-di-tert-butyl-1'-hydroxyphenyl)propionate, and 4,4'-thiobis-(6-butylphenol).

Ultraviolet Ray Absorber; ethyl-2-cyano-3,3-diphenyl acrylate, 2-(2'-hydroxy-5-methylphenyl)benzotriazole, and 2-hydroxy-4-octoxybenzophenone.

Plasticizer; dimethyl phthalate, glycerine, dipropylene glycol, triethylene glycol, diethylene glycol, diethyl phthalate, wax, fluid paraffin, and phosphoric acid ester.

Antistatic Agent; pentaerythrite monostearate, sorbitan monopalmitate, sulfated oleic acid, polyethylene oxide and carbon wax.

Lubricant; ethylenebisstearoamide, and butyl stearate.

Colorant; carbon black, phthalocyanine, quinacridone, indoline, azo type pigments, titanium oxide and iron oxide red.

Filler; glass fiber, asbestos, mica, wollastonite, calcium silicate, aluminum silicate and calcium carbonate.

In addition, other polymer compounds and inorganic compounds can be added within the range that does not reduce the effects of the present invention.

Other thermoplastic resins which can be used in the present invention include high density polyethylene, intermediate density polyethylene, low density polyethylene, ionomer, propylene homopolymer, ethylene/propylene block or random copolymer, and copolymers of ethylene and α-olefin having 3 to 12 carbon atoms.

In addition, polystyrene polyvinyl chloride, polyethylene terephthalate and polycarbonate can be used.

The copolymer of ethylene and α-olefin having 3 to 12 carbon atoms includes an ethylene/butene-1 copolymer, an ethylene/4-methylpentene-1 copolymer, an ethylene/hexene-1 copolymer, modified polypropylene, modified polybutene-1 and modified poly(4-methylpentene), all modified polymers being obtained by blending ethylene/propylene rubber, and polymers obtained by graft polymerization of unsaturated carboxylic acid or its anhydride onto the above polyolefin resins by the use of an organic peroxide.

Of these, a polypropylene resin, and high density, intermediate density and low density polyethylenes are poor in compatibility with an olefin/vinyl alcohol copolymer, and thus the resin composition of the present invention can be effectively applied to the above resins.

As EVOH, a saponified product of an ethylene/vinyl acetate copolymer and a saponified product of a propylene/vinyl acetate copolymer can be used. Of these, the ethylene/vinyl acetate copolymer saponified product is preferred from a viewpoint of ease of polymerization.

As the EVOH, the product having an ethylene content of 15 to 60 mol% and a saponification degree of the vinyl acetate component of at least 90 mol% is used. If the ethylene content is less than 15 mol%, melt moldability is decreased, and if the ethylene content is more than 60 mol%, gas barrier properties are reduced. If the saponification degree of the vinyl acetate component is less than 90 mol%, gas barrier properties are reduced. EVOH having an ethylene content of 25 to 50 mol% and a saponification degree of at least 96 mol% is preferably used. The EVOH may contain, as well as ethylene and vinyl acetate (vinyl alcohol resulting saponification thereof), a small amount of unsaturated acid, such as acrylic acid, methacrylic acid, crotonic acid or maleic acid, or its alkyl ester, α-olefin, such as propylene, butene, α-decene or α-octadecene as a comonomer.

PA includes various polymers, for example, condensation polymers of lactam, ε-amino acid, or condensation copolymers of dibasic acid and diamine, i.e., polyamide. More specifically, condensation polymers of ε-caprolactam, aminolactam, enanthlactam, 11-aminoundecanic acid, 7-aminoheptanic acid, 9-aminononanic acid, α-pyrrolidone, and α-piperidone, or condensation copolymers of diamines, such as hexamethylenediamine, nonamethylenediamine, undecamethylenediamine, dodecamethylenediamine and methaxylylenediamine, and dicarboxylic acid, such as terephthalic acid, isophthalic acid, adipic acid, sebacic acid, dodecane dibasic acid, and glutaric acid, can be used.

Specific examples are Nylon 4, Nylon 6, Nylon 7, Nylon 8, Nylon 11, Nylon 12, Nylon 6.6, Nylon 6·9, Nylon 6·10, Nylon 6·11, Nylon 6·12, Nylon 6·66, and Nylon prepared from m-xylylene diamine and a dibasic acid (MXD Nylon).

The resin composition of the present invention is extruded or molded into multi-layer laminates such as a film, a sheet, a tube or a bottle, for example, singly or after being blended, or together with other resins as an adhesive, by known melt processing method or compression forming method.

The above lamination methods include a coextrusion coating method, a coextrusion lamination method (feed block method and multi-manifold method) and a coinjection molding method.

The multi-layer laminate thus produced can be subjected to heat stretching by a method comprising reheating and stretching by the use of e.g., a vacuum forming machine, a compression forming machine or a stretch-blow molding machine, or by using a uniaxial or biaxial stretching machine.

Assuming that a layer of the resin composition of the present invention is layer B, a gas barrier resin layer is layer C, and other thermoplastic resin layer is layer A, typical layer structures of the multi-layer laminate are A/B/C and C/B/A/B/C.

Thermoplastic resins constituting the both outer layers may be the same or different.

High interlayer adhesive strength can be obtained by using the resin composition of the present invention in place of the conventional adhesive resins. Moreover, since the resin composition of the present invention increases the compatibility between the thermoplastic resin and the gas barrier resin in recovery of scraps containing EVOH, PVDC or PA and the other thermoplastic resins, and in utilizing them together with the resin composition, delamination can be greatly reduced.

Although it is not clear why adhesive strength and mechanical strength between recovered and mixed resins are excellent, an examination of the dispersion state of the recovered mixed resin (EVOH or PA, polyolefin resin and the resin composition of the present invention) by the use of a Model S-530 scanning electron microscope (manufactured by Hitachi Co., Ltd.) has revealed that the boundary between EVOH or PA and the polyolefin resin is not clear as compared with that when the conventional adhesive resin is used; the compatibility between the EVOH or PA and the polyolefin resin is good. Thus it is considered that mixing the components (A) and (B) produces a certain kind of compatibilization action.

Astonishingly, the resin composition of the present invention, when mixed with a polyolefin resin and EVOH or PA in the scraps for recycle use, enables to retain high adhesive strength and compabilitity.

In other words, when scraps are recovered and utilized, then the mixture of resins in the scraps and resin composition of the present invention act as an adhesive resin.

The resin composition of the present invention is good in adhesive strength, compatibility in recovery and utilization, mechanical strength and so forth and, therefore, can be effectively utilized for production of food wrapping material, medicine wrapping material, or containers required to have gas barrier properties.

The present invention is described in greater detail with reference to the following examples.

### Preparation Example

### Preparation of Ethylene Copolymer Resins:

A 4-liter autoclave-type reactor divided into two zones was used, and the following copolymers were obtained under conditions of temperature of 190 to 230°C, pressure of 1,800 to 1,950 atmospheric pressure, and using tert-butylperoxy pivalate as an initiator. Unsaturated carboxylic acid anhydride, and other monomer(s) or solvent were injected into the second stage compressor at the upstream thereof, and fed into the first zone of the reactor along with ethylene.

The copolymer thus formed was separated from unreacted monomers in a high pressure separator and a low pressure separator, and pelletized by the use of an extruder. The composition of the copolymer was determined by the use of an infrared spectrometer and ¹³C-NMR:
(a) Ethylene/methyl methacrylate/maleic anhydride copolymer (MFR 8.1 g/10 min., ethylene content 89.1 wt%, methyl methacrylate content 7.8 wt%, maleic anhydride content 3.1 wt%)
(b) Ethylene/ethyl acrylate/maleic anhydride copolymer (MFR 7.4 g/10 min., ethylene content 90.2 wt%, ethyl acrylate content 6.2 wt%, maleic anhydride content 3.6 wt%)
(c) Ethylene/maleic anhydride copolymer (MFR 8.4 g/10 min., ethylene content 95.4 wt%, maleic anhydride content 4.6 wt%)
(d) Ethylene/methyl acrylate/maleic anhydride copolymer (MFR 3.6 g/10 min., ethylene content 94.1 wt%, methyl acrylate content 2.0 wt%, maleic anhydride content 3.9 wt%)

### Preparation of Resin Mixture as Component (B):

| | |
|---|---|
| (m) Ethylene/vinyl acetate copolymer resin (vinyl acetate content 28.6 wt%) | 83.1 wt%, |
| Linear polyethylene containing 1-hexene as a comonomer | 11.3 wt%, |
| Ethylene/propylene/dicyclopentadiene elastomer | 5.6 wt%, |

MFR=1 g/10 min., density=0.914 g/cc, Soxhlet extraction residue using toluene=26.3 wt%

| | |
|---|---|
| (n) Ethylene/vinyl acetate copolymer resin (vinyl acetate content 27.1 wt%) | 66.8 wt%, |
| Linear polyethylene containing 1-hexene as a comonomer | 32.4 wt%, |
| Ethylene/propylene/ethylidene norbornene elastomer | 0.8 wt%, |

MFR=2 g/10 min., density=0.930 g/cc, Soxhlet extraction residue using toluene=17.7 wt%

| | |
|---|---|
| (o) Ethylene/vinyl acetate copolymer resin (vinyl acetate content 28.1 wt%) | 82.6 wt%, |
| Linear polyethylene containing 1-hexene as a comonomer | 10.3 wt%, |
| Ethylene/propylene/ethylidene norbornene elastomer | 7.1 wt%, |

MFR=1 g/10 min., density=0.914 g/cc, Soxhlet extraction reside using toluene=25.8 wt%

| | |
|---|---|
| (p) Ethylene/vinyl acetate copolymer resin (vinyl acetate content 26.6 wt%) | 67.1 wt%, |
| Linear polyethylene containing 1-hexene as a comonomer | 32.2 wt%, |
| Ethylene/propylene/dicyclopentadiene elastomer | 0.7 wt%, |

MFR=2 g/10 min., density=0.930 g/cc, Soxhlet extraction residue using toluene=17.1 wt%

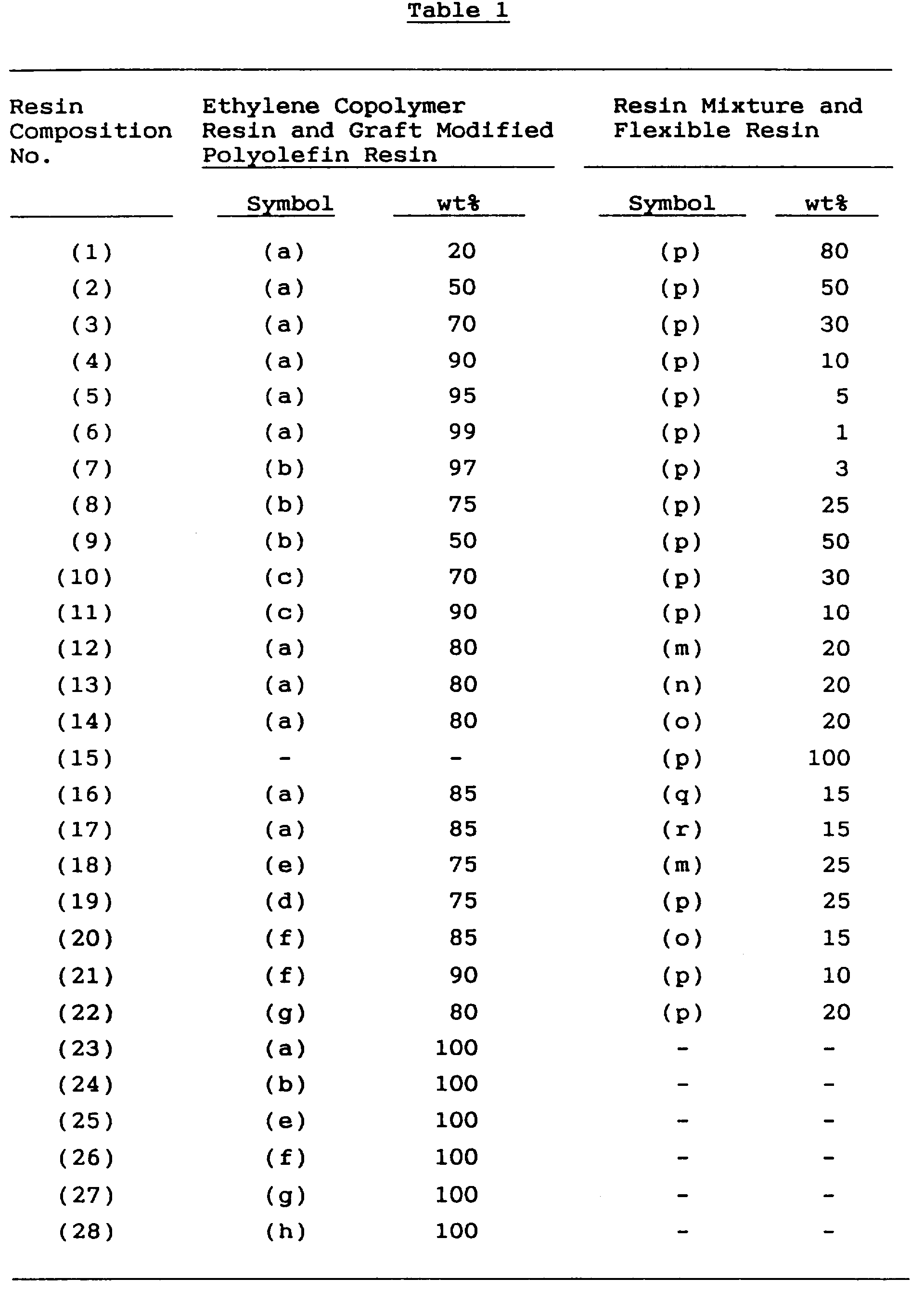

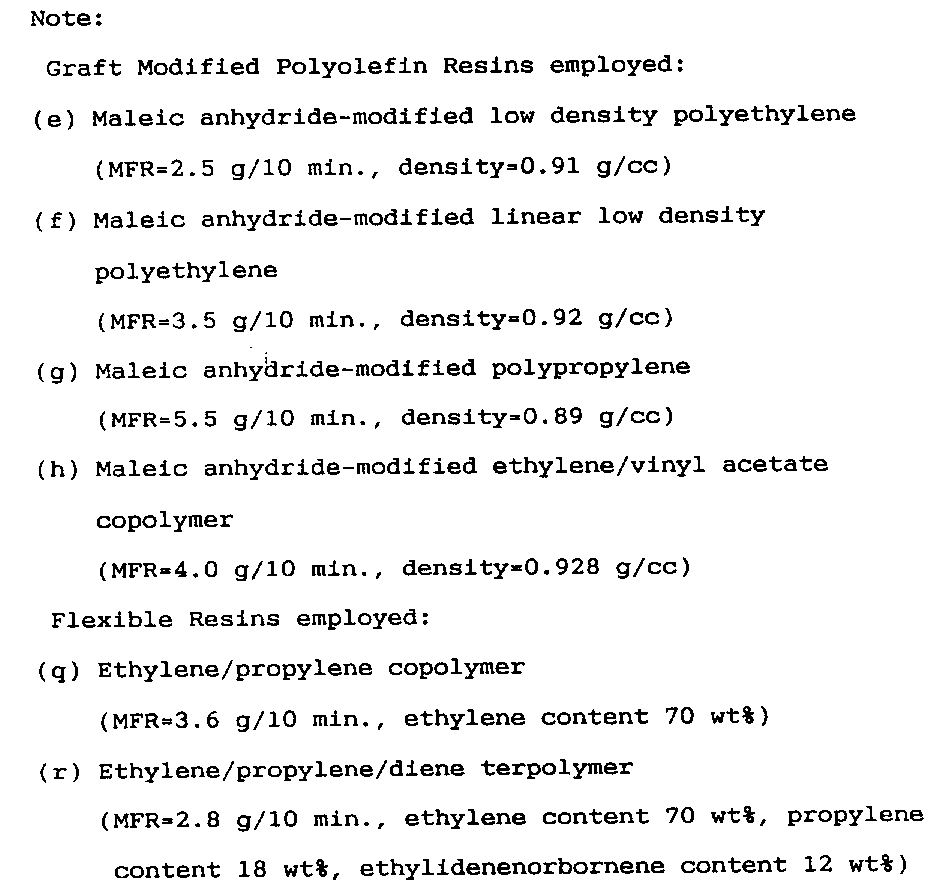

### Example 1

Resin composition (3) of Table 1 as an adhesive layer, low density polyethylene, Sholex F141 (produced by Showa Denko K.K., MFR-4.0 g/10 min., density=0.921 g/cc), and EVOH resin, Eval EP-F 101 (produced by Kuraray Co., Ltd., ethylene content 32 mol%) were extruded into a laminated film (thickness: 30 µm/30 µm/30 µm) at a temperature of 220°C by the use of a multi-layer extruding machine (produced by Yoshii Tekko Co., Ltd., diameter 40 mm). The interlayer strength between the adhesive resin layer and the EVOH layer was measured by the use of tensile testing machine (produced by Toyo Seiki Co., Ltd.), and the peeling strength was measured by peeling at an angle of 180° at a peeling rate of 300 mm/min.

For recovery or reutilization of scraps, usually, the scraps are molded to form another film, or they are mixed with the resin constituting the outermost layer. Thus, in order to determine whether sufficient adhesive strength can be retained when the scraps are used for the above purposes, the above laminate film was ground by the use of Model DP-2 grinder (produced by Daiko Seiki Co., Ltd.). The powder thus obtained was mixed with the above adhesive resin in a proportion of 50% by weight, and then molded into a laminate film (amount of recycled resin: 50% by weight). On the other hand, the above powder alone was used as an adhesive resin (amount of recycled resin: 100% by weight). For the laminate films thus produced, interlayer strength and appearance were measured. The results are shown in Table 2. The peeling strength was measured for 10 test pieces, and the average value is shown in Table 2. At the same time, the appearance of the multi-layer film (particularly formation of fish-eye due to poor compatibility between EVOH or PA and the polyolefin resin) was examined.

### Examples 2 to 13 and Comparative Examples 1 to 10

Resin compositions shown in Table 1 were processed in the same manner as in Example 1 to produce an adhesive layer. The multi-layer thus obtained were evaluated in the same manner as in Example 1. The results are shown in Table 2.

In Comparative Example 8, the low density polyethylene resin, Sholex F141, was replaced by linear low density polyethylene, Sholex 750F (produced by Showa Denko K.K., MFR=4.0 g/10 min., density=0.920 g/cc).

In Comparative Example 9, the low density polyethylene resin, Sholex F141, was replaced by a polypropylene resin, Sho-allomer FA523 (MFR=9.0 g/10 min.).

In Comparative Example 10, the low density polyethylene resin, Sholex F141, was replaced by an ethylene/vinyl acetate copolymer resin, Sholex EVA (MFR=7.0 g/10 min., density=0.924 g/cc, vinyl acetate content=7.0% by weight).

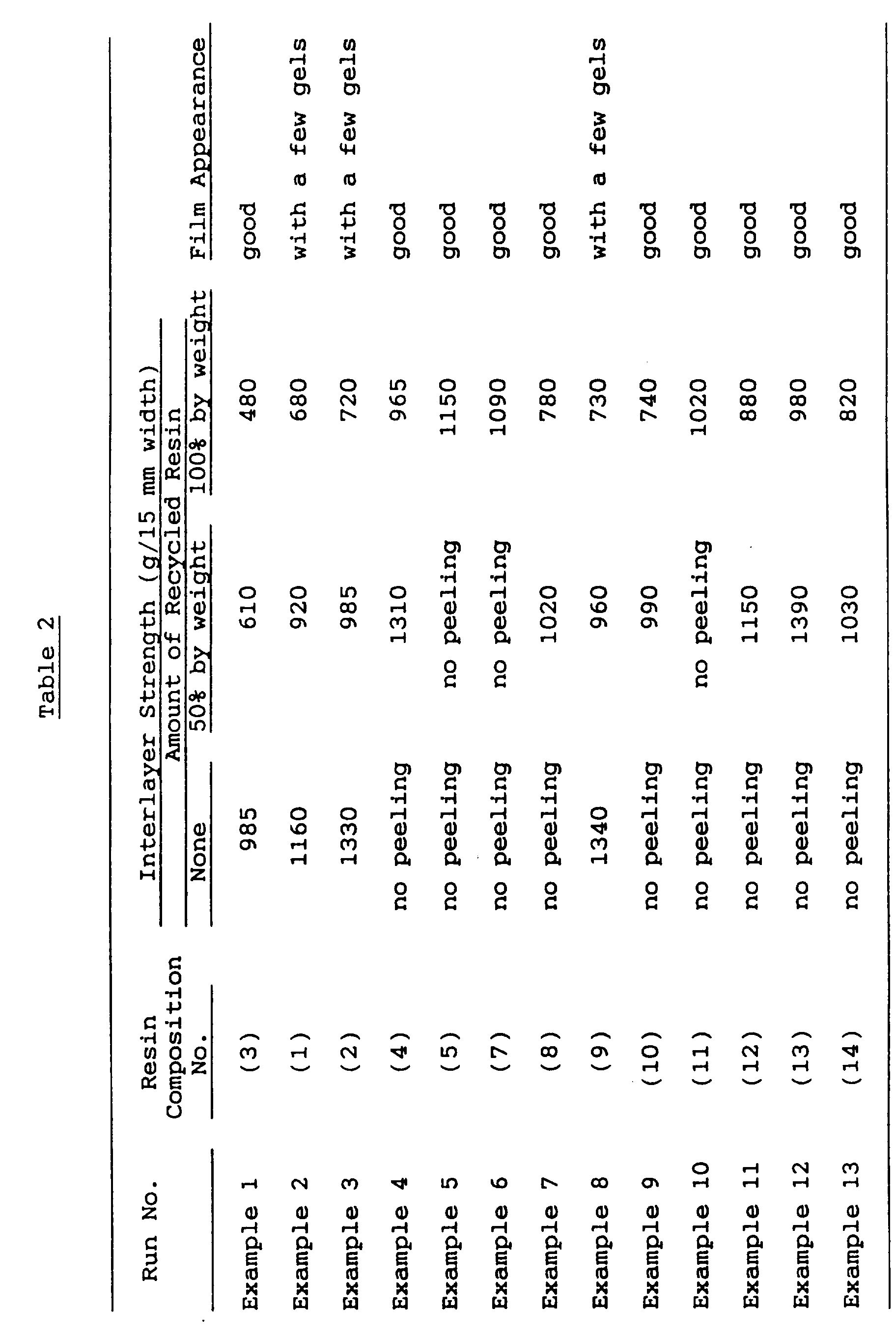

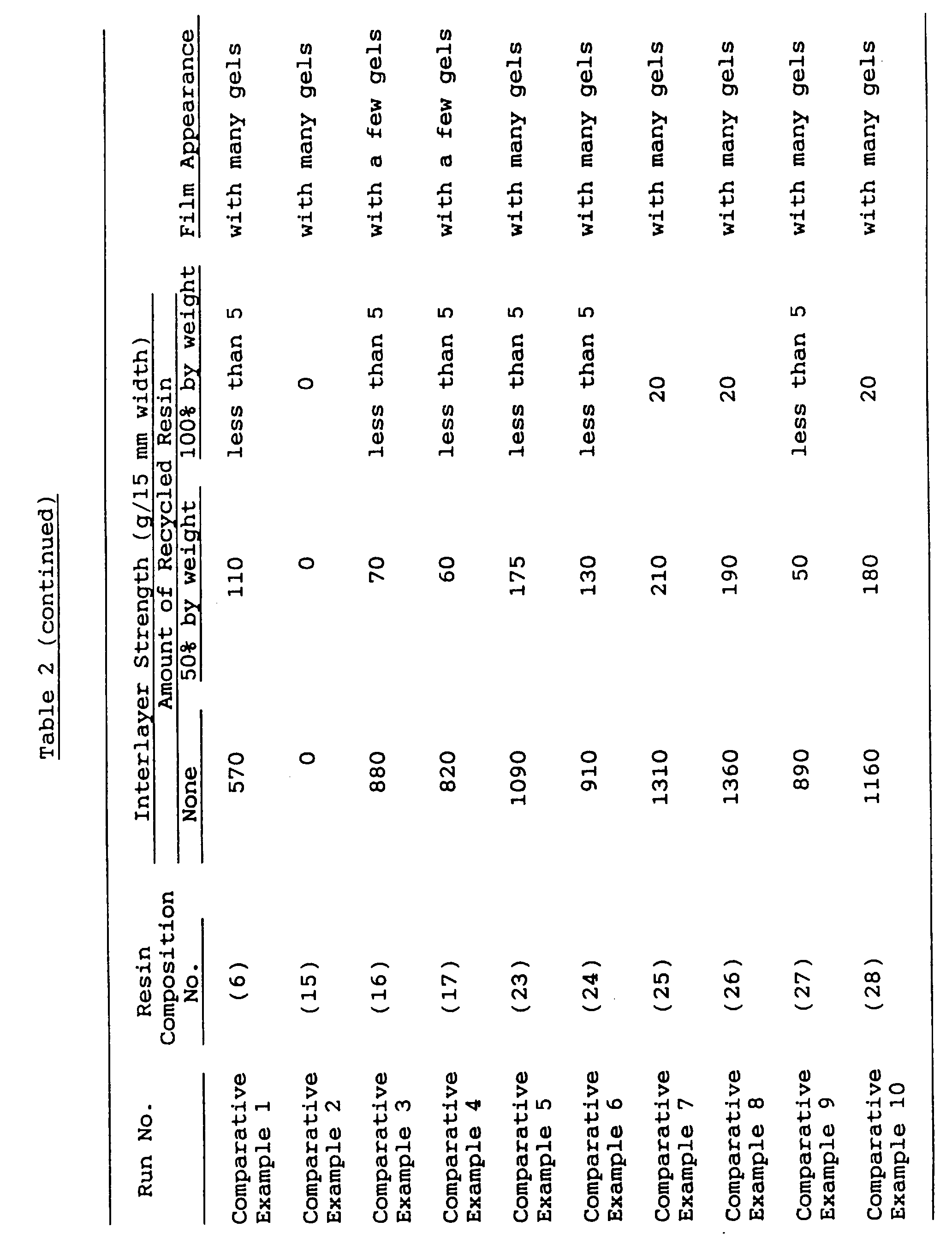

### Examples 14 to 17 and Comparative Examples 11 to 14

The procedure of Example 1 was repeated, in which EVOH was replaced by a polyamide resin, namely Nylon 6 (produced by Ube Kosan Co., Ltd., specific gravity 1.14, 1022B), and the molding temperature was changed to 240°C. The results are shown in Table 3.

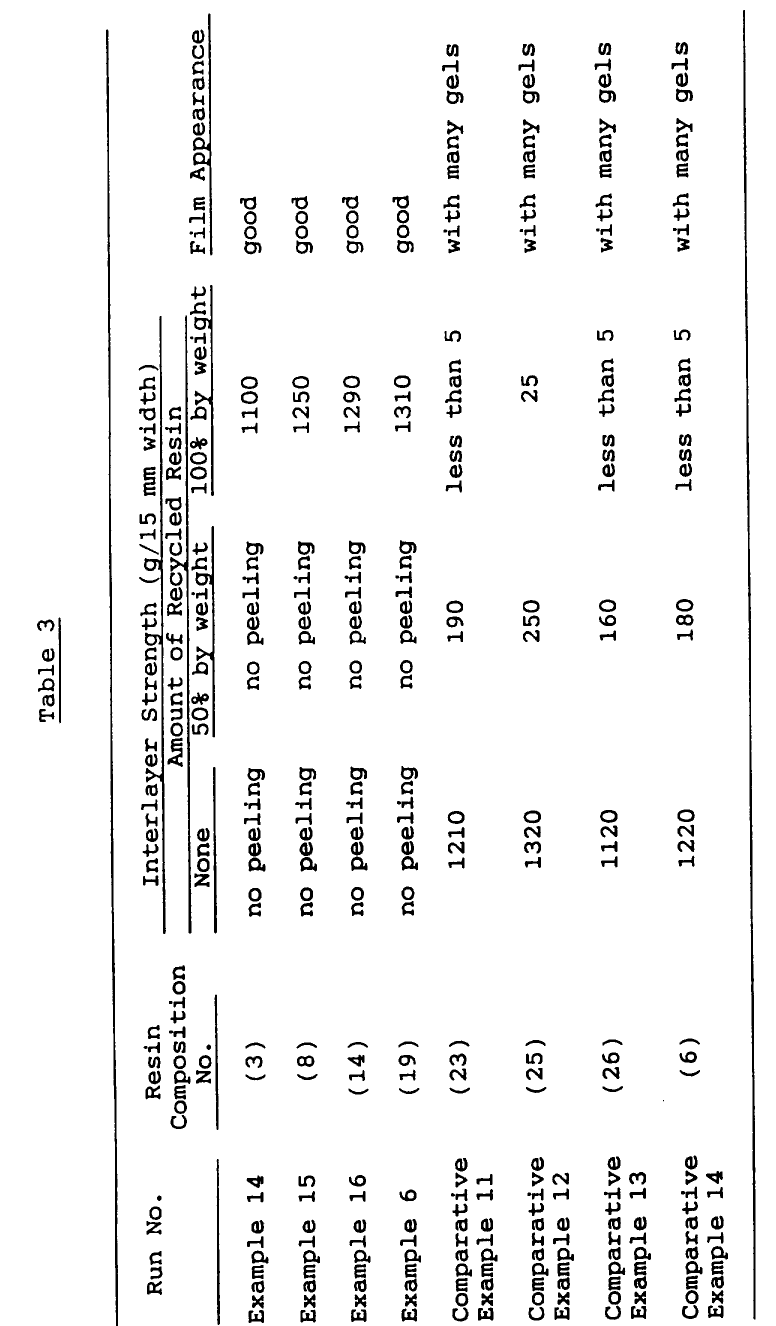

### Examples 19 to 20 and Comparative Examples 15 to 19

The procedure of Example 1 was repeated, in which EVOH was replaced by Eval EP-E105 (produced by Kuraray Co., Ltd., ethylene content 44 mol%). The results are shown in Table 4.

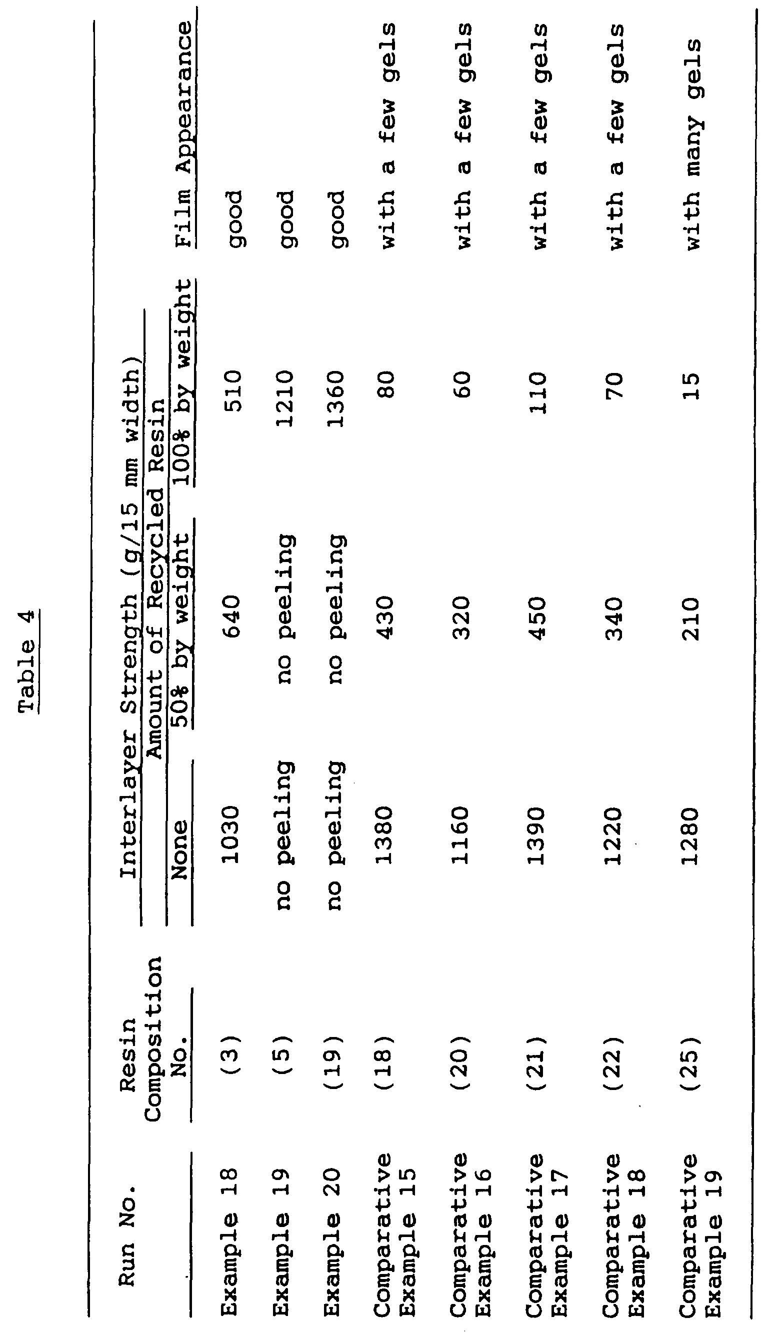

## Claims

1. A resin composition which comprises:
(A) 2 to 98% by weight of an ethylene copolymer resin comprising ethylene unit and 0.01 to 20% by weight of an unsaturated carboxylic acid anhydride unit; and
(B) 98 to 2% by weight of a resin mixture comprising:
(i) 50 to 90% by weight of an ethylene/vinyl acetate copolymer resin,
(ii) 40 to 9.5% by weight of a copolymer resin of ethylene and an α-olefin having 3 to 12 carbon atoms, and
(iii) 10 to 0.5% by weight of an ethylene/propylene/ unconjugated diene terpolymer,
said resin mixture having a toluene extraction residue of 10 to 60% by weight.

2. An adhesive resin or compatibilizer comprising the resin composition of Claim 1, for lamination of at least one resin selected from the group consisting of olefin/vinyl alcohol copolymer resin, polyvinylidene chloride resin and a polyamide resin, with other thermoplastic resins.

3. The resin composition as claimed in Claim 1 wherein the ethylene copolymer resin further contains other radical polymerizable monomer as a third component.

4. The resin composition as claimed in Claim 3 wherein the radical polymerizable monomer is selected from ester compounds, amide compounds, acid compounds, and hydrocarbon.

5. The resin composition as claimed in Claim 1 wherein the ethylene copolymer resin has MFR (determined at 190°C according to JIS-K-6760) of 0.1 to 100.

6. The resin composition as claimed in Claim 1 wherein the resin mixture has MFR (determined at 190°C according to JIS-K-6760) of 0.1 to 100.

7. The resin composition as claimed in Claim 1, further containing at least one of an antioxidant, a ultraviolet absorber, a plasticizer, an antistatic agent, and a filler.

## Patentansprüche

1. Harzzusammensetzung, die umfaßt
(A) 2 bis 98 Gewichts-% eines Ethylen-Copolymerharzes, das die Ethyleneinheit und 0,01 bis 20 Gewichts-% einer ungesättigten Carbonsäureanhydrid-Einheit enthält; und
(B) 98 bis 2 Gewichts-% eines Harzgemisches, das
(i) 50 bis 90 Gewichts-% eines Ethylen-Vinylacetat-Copoly merharzes,
(ii) 40 bis 9,5 Gewichts-% eines Copolymerharzes von Ethylen und einem α-Olefin mit 3 bis 12 Kohlenstoffatomen und
(iii) 10 bis 0,5 Gewichts-% eines Ethylen/Propylen/unkonju giertes Dien-Terpolymeren umfaßt,
wobei das Harzgemisch einen Toluen-Extraktionswert von 10 bis 60 Gewichts-% hat.

2. Klebharz oder Mittel zur Kompatibilisierung, umfassend die Harzzusammensetzung von Anspruch 1, zur Laminierung von wenigstens einem Harz, ausgewählt aus der Gruppe, die aus Olefin/Vinylalkohol-Copolymerharz, Polyvinylidenchloridharz und einem Polyamidharz besteht, mit anderen thermoplastischen Harzen.

3. Harzzusammensetzung nach Anspruch 1, worin das Ethylen-Copolymerharz weiterhin ein anderes radikalisch polymerisierbares Monomeres als eine dritte Komponente enthält.

4. Harzzusammensetzung nach Anspruch 3, worin das radikalisch polymerisierbare Monomere ausgewählt ist unter Esterverbindungen, Amidverbindungen, Säureverbindungen und Kohlenwasserstoffen.

5. Harzzusammensetzung nach Anspruch 1, worin das Ethylen-Copolymerharz eine MFR (bestimmt bei 190° C gemäß JIS-K-6760) von 0,1 bis 100 hat.

6. Harzzusammensetzung nach Anspruch 1, worin das Harzgemisch eine MFR (bestimmt bei 190° C gemäß JIS-K-6760) von 0,1 bis 100 hat.

7. Harzzusammensetzung nach Anspruch 1, die weiterhin wenigstens ein Antioxidationsmittel, ein Ultraviolett-Absorptionsmittel, einen Weichmacher, ein antistatisches Mittel und einen Füllstoff enthält.

## Revendications

1. Composition de résine qui comprend :
(A) 2 à 98% en poids d'une résine copolymère d'éthylène comprenant l'unité éthylène et 0,01 à 20% en poids d'une unité anhydride d'acide carboxylique insaturée ; et
(B) 98 à 2% en poids d'un mélange de résine comprenant :
(i) 50 à 90% en poids d'une résine copolymère éthylène/acétate de vinyle,
(ii) 40 à 9,5% en poids d'une résine copolymère d'éthylène et d'une a-oléfine ayant 3 à 12 atomes de carbone, et
(iii) 10 à 0,5% en poids d'un terpolymère éthylène/propylène/diène non-conjugué,
ledit mélange de résine ayant un reste d'extraction dans le toluène de 10 à 60% en poids.

2. Résine adhésive ou agent de compatibilité comprenant la composition de résine selon la revendication 1, pour stratifier au moins une résine choisie dans le groupe constitué d'une résine copolymère oléfine/alcool vinylique, une résine poly(chlorure de vinylidène) et une résine polyamide, avec d'autres résines thermoplastiques.

3. Composition de résine selon la revendication 1, où la résine de copolymère d'éthylène contient en outre un autre monomère polymérisable par voie radicalaire en tant que troisième composant.

4. Composition de résine selon la revendication 3, où le monomère polymérisable par voie radicalaire est choisi parmi les composés ester, les composés amide, les composés acides et les hydrocarbures.

5. Composition de résine selon la revendication 1, où la résine copolymère d'éthylène a un MFR (déterminé à 190°C selon JIS-K-6760) de 0,1 à 100.

6. Composition de résine selon la revendication 1, où le mélange de résine a un MFR (déterminé à 190°C selon JIS-K-6760) de 0,1 à 100.

7. Composition de résine selon la revendication 1, qui contient en outre au moins un produit choisi dans le groupe constitué d'un antioxydant, un absorbeur d'ultraviolets, un plastifiant, un agent antistatique, et une charge.
